# EUROPEAN PATENT SPECIFICATION

(11) **EP 1 613 704 B1**
(45) Date of publication and mention of the grant of the patent: **09.05.2007**
(21) Application number: 04749498.4
(22) Date of filing: 29.03.2004
(51) Int. Cl.: C09D 5/00, E01F 9/04, C08K 3/00

(54) **PAVEMENT MARKING MATERIAL**
FAHRBAHNMARKIERUNGSMATERIAL
MATERIAU DE MARQUAGE DE CHAUSSEE

(30) Priority: 11.04.2003 JP 2003107743
(43) Date of publication of application: 11.01.2006
(73) Proprietor: 3M Innovative Properties Company, St. Paul, MN 55133-3427 (US)
(72) Inventor: NAGAOKA, Yoshiyuki, Yamagata 990-2428 (JP); MIZUFUNE, Kanya, Yamagata 990-0034 (JP)
(74) Representative: Vossius & Partner
(86) International application number: PCT/US2004/009554
(87) International publication number: WO 2004/099324

(56) References cited:
- US-A- 3 386 807
- US-A- 3 450 556
- US-A- 4 121 011
- US-A- 4 166 058
- US-A- 4 661 305

## Description

The present invention relates to marking materials that may be applied to structure surfaces as temporary markers. More specifically, the present invention relates to marking materials that undergo irreversible color changes, rendering the marking materials effectively invisible to observers.

Marking materials are typically placed on structure surfaces, such as pavement, tunnels, curbs, and building walls, for use as temporary markers. For example, during road construction, temporary markers functioning as white boundary lines may be created for rerouting traffic from the original lanes. While the road construction continues, the temporary markers remain visible to observers. However, after the road construction is completed, the temporary markers are no long required. As such, the temporary markers must be removed or rendered effectively invisible to observers.

Conventional temporary markers derived from paints or thermoplastic sheets may be rendered effectively invisible to observers by either painting the color of the road surface (e.g., black or gray) over the temporary markers, or by shaving the temporary markers off of the road. These methods require removal work that is laborious, and may potentially damage the road surface.

Alternatively, conventional temporary markers may be derived from delamination materials, such as adhesive tapes. The delamination material is adhered to the road surface to provide the white boundary lines. When the road construction is completed, the tape is removed from the road surface. However, conventional delamination types of temporary markers have relatively poor adhesion. Primer treatment may be required for enhancing the adhesive strength, depending on the state of the road surface. When the primer treatment is carried out, however, a large force is typically required to remove the adhesive. This increases the difficulty in the removal work.

Japanese Patent Laid-Open Nos. 08-113918, 08-245253, and 07-268818 disclose color-changeable materials that include binder materials and reversible thermal-sensitive pigments. The reversible thermal-sensitive pigments are transparent above a specific temperature, and develop a color below the specific temperature. As such, materials containing reversible thermal-sensitive pigments may be adapted to exhibit a first color (e.g., a cool blue color) above a specific temperature, which changes to a second color (e.g., a warm red color) below the specific temperature. However, when the temperature rises above the specific temperature again, the materials then change back to the first color. Such materials are suitable as warning signs. For example, the materials may be provided on roads so as to display indicia, such as "Freeze Cautions", when the environment falls below the specific temperature. When the environment temperature rises above the specific temperature, the materials return back to the original colors, effectively rendering the indicia invisible until the temperature subsequently falls below the specific temperature. Such materials may also function as visual thermometers for determining whether an environmental temperature is higher or lower than a specific color changing temperature.

Furthermore, paints containing thermal-sensitive pigments that irreversibly change color are generally utilized, not as a temporary markers; but as visual temperature indicators for identifying exposure temperatures. The paint is applied to a surface of an article, and is then utilized to determine whether the article is exposed to a specific temperature, or above. When the article is exposed to the specific temperature, or above, the paint changes from a first color to a second color of the surface of the article.

US-B-4,166,058 relates to a color sensitive primer comprising 100 parts of an ethylenically unsaturated elastomer; 300 to 800 parts of a phenolic resin, A or B stage; 0 to 100 parts inorganic filler; 10 to 30 parts epoxy resin; about 0.5 to 10 parts heat sensitive dye; about 0.5 to 3 parts sulfur.

US-B-3,386,807 describes color change indicators which show a color change under sterilization conditions during stem sterilization.

US-B-4,661,305 discloses an article which in use is heated to an elevated utilization temperature comprises a thermochromic composition, which when heated to a transition temperature, provides a visible color change in less than about 5 seconds. The transition temperature is at least 30°C greater than the utilization temperature.

US-B-3,450,556 is directed to traffic marking of temporary nature. The traffic marking is based on the use of a composition comprising (a) a light colored pigment capable of color discharge to or approaching an appropriate background color when exposed to sulfide ion under basic or alkaline conditions and (b) a vehicle for the pigment which includes an alkaline-sensitive organic polymeric material.

Accordingly, there is a need for a temporary marker derived from a marking material that undergoes an irreversible color change, which effectively renders the temporary marker invisible to observers.

The present specification describes a marking material for use on a surface. The marking material includes a binder material and a thermal-sensitive pigment, and exhibits a first color different from a surface color of the surface. Upon being heated to a temperature of at least about 70°C, however, the marking material irreversibly changes color from the first color to a second color. The second color effectively renders the marking material invisible to observers. Preferably the second color is substantially the same as the surface color.

The present invention relates to a pavement marker for use on a pavement surface. The pavement marker includes a mixture of a binder material and a thermal-sensitive pigment, and exhibits a first color different from a pavement color. The pavement color is selected from a group consisting of gray and black. Upon being heated to a temperature of at least about 70°C, however, the pavement marker irreversibly changes color from the first color to a second color, the second color being effectively invisible to an observer as described above. This means that the second color approximates that of the surface to which the marking material has been applied. Preferably the second color is substantially the same as the pavement color.

The present specification further describes a method of using a marker with a surface, where the marker includes a binder material and a thermal-sensitive pigment. The method includes providing the marker on the surface, where the marker exhibits a first color different from a surface color. The color of the marker is irreversibly changed from the first color to a second color by heating the marker to a temperature of at least about 70°C, where the second color is effectively invisible to an observer as described above. Preferably the second color is substantially the same as the surface color.

Irreversibly changing marking materials, pavement markers, and markers from the first colors to the second colors effectively renders the markers invisible to observers.

The present specification describes marking materials for use as temporary markers that may be applied as layers onto structure surfaces. The marking materials include a binder material and a thermal-sensitive pigment, where the thermal-sensitive pigment undergoes an irreversible color change when heated. The term "irreversible color change" is defined herein as a color change that does not revert back to the original color.

When applied to a structure surface, such as a pavement surface, a temporary marker of the present invention maintains a first color, which is different from, and visibly contrasts, the color of the structure surface. Because the first color differs from the color of the structure surface, the temporary marker remains visible to observers. For example, the temporary marker of the present invention may function as a white boundary line for rerouting traffic during road construction. In this case, the first color may be white, which visibly contrasts the darker color of the road pavement (e.g., black or gray).

When the temporary marker is no longer needed, the temporary marker may be heated to a specific temperature, or above. This irreversibly changes the color of the temporary marker from the first color to a second color, where the second color effectively renders the marking material invisible to observers. This means that the second color approximates that of the surface to which it has been applied and is preferably substantially the same color as the structure surface. The temporary marker to be used for the desired time period and then effectively rendered invisible by merely heating the temporary marker.

Suitable specific temperatures range from about 70°C to about 500°C, with particularly suitable specific temperatures ranging from about 100°C to about 400°C. If the specific temperature is below about 70°C, the color of the temporary marker could potentially change prematurely due to high environmental temperatures. Moreover, if the specific temperature is greater than about 500°C, the time and effort required to induce the color change by heating may become too great for efficiency. The temporary marker of the present invention desirably undergoes the color change upon heating the temporary marker at the suitable and particularly temperatures for a time period ranging from about one minute to about thirty minutes.

The binder materials used with the present invention entrain the thermal-sensitive pigments and function to maintain the temporary markers in a layer or film form. Examples of suitable binder materials include conventional transparent binder materials, such as epoxy resins, acrylic resins, urethane resins, silicone varnish, polyamine resins, polyisocyanate resins, and combinations thereof. The binder materials may additionally include curing agents, curing accelerators, anti-settling agents, ultraviolet absorbers, and combinations thereof. The thermal-sensitive pigments are not required to be uniformly dispersed in the binder materials. The thermal-sensitive pigments desirably only need to be coupled to the binder materials to prevent the thermal-sensitive pigments from precipitating out from the temporary markers during use.

As previously discussed, the thermal-sensitive pigments exhibit irreversible color changes when being heated to a specific temperature. Regardless of the variations of a temperature environment after the color change, the temporary marker does not return to the first color (i.e., the original color). Examples of suitable thermal-sensitive pigments comprise pigments of metal hydroxides, basic metal carbonates, metal phosphates, ammonium metal salts, ammonia complexes, metal salt hydrates (including hydrated salts and hydrated crystals), and combinations thereof. Examples of particularly suitable thermal-sensitive pigments include pigments of hydrated crystal type, including hydrated crystals (hydrated crystal-type thermal-sensitive pigments) among the metal salt hydrates. The hydrated crystal-type thermal-sensitive pigments are the pigments in which at least a part of the water of crystallization, acid, or base contained in the thermal-sensitive pigments is desorbed by heating. This induces the color change from the first color to the second color. Examples of suitable hydrated crystal-type thermal-sensitive pigments include pigments comprising bismuth oxalate. Bismuth oxalate is generally a heptahydrated crystal, where the crystal is changed to a monohydrate by thermal dehydration at a temperature of 70°C, or above.

The thermal-sensitive pigments are selected such that the first color is visibly different from color of the intended structure surface that the temporary marker is to be applied to, and such that the second color upon heating preferably becomes substantially the same as the color of the intended structure surface (i.e., black or gray). Additional non-thermal-sensitive pigments and dyes may also be incorporated into the marking materials to adjust the second color to be substantially the same color of the intended structure surface.

Suitable concentrations of the thermal-sensitive pigments relative to about 100 mass parts of the binder material range from about 10 mass parts to about 500 mass parts, with particularly suitable concentrations ranging from about 50 mass parts to about 300 mass parts. Such concentrations may also be stated in weight percent, and herein all concentrations are expressed in weight percent, unless otherwise stated. Suitable component concentrations in the marking material of the present invention range from about 16% to about 91% of the binder material and from about 9% to about 84% of the thermal-sensitive pigment, based on the total compositional weight of the marking material of the present invention. Particularly suitable component concentrations in the marking material of the present invention range from about 25% to about 67% of the binder material and from about 33% to about 75% of the thermal-sensitive pigment, based on the total compositional weight of the marking material of the present invention. If the component concentration of the thermal-sensitive pigment is less than about 9%, the temporary marker tends to be light colored, which reduces the visibility of the temporary marker. Alternatively, if the component concentration of the thermal-sensitive pigment is greater than about 84%, the thermal-sensitive pigment may potentially precipitate out of the temporary marker during use.

In addition to the above-mentioned materials, the marking material of the present invention may also contain other additives. For example, in order to enhance visibility of a temporary marker at night, the marking material of the present invention may include transparent beads having refractive indexes ranging from about 1.5 to about 2.3. Examples of suitable transparent beads include glass beads, ceramic beads, and combinations thereof. The transparent beads may be spread on the temporary marker before drying so that the transparent beads form a bead layer on the surface of the temporary marker. In addition, the marking material may include aggregates, such as natural stones, artificial stones, ceramics, and combinations thereof, to enhance abrasion resistance of the temporary marker.

The temporary markers of the present invention may be film-formed as layers from marking materials of the present invention in a variety of manners. For example, the marking materials may be dissolved or dispersed in volatile solvents and painted onto a structure surface as a layer. The volatile solvents then evaporate to provide the temporary marker as a dried film on the structure surface. Alternatively, the marking materials may be dispersed in vehicles containing curing agents in lieu of volatile solvents, which are also painted onto a structure surface as a layer. The solution may then be cured to provide the temporary marker on the structure surface.

The temporary marker may also constitute a laminate that has a layer of the marking material on a carrier film. The temporary marker may be fixed to a structure surface with adhesives disposed on the carrier film. The adhesives desirably bond the temporary marker to the structure surface so as to prevent delamination during use (e.g., before construction work is completed), and are preferably used in combination with a primer. Examples of suitable adhesives comprise adhesive resins, such as epoxy resins, acrylic resins, urethane resins, and combinations thereof; and may also include curing agents and curing accelerators.

Examples of suitable thicknesses of the temporary marker of the present invention range from about 50 micrometers to about 3,000 micrometers. Examples of particularly suitable thicknesses of the temporary marker of the present invention range from about 100 micrometers to about 2,000 micrometers. Thicknesses below about 50 micrometers result in temporary markers that tend to exhibit colors that may be too light, which reduces the visibility of the temporary markers. Alternatively, thicknesses greater than about 3,000 micrometers generally subject the temporary markers to excess abrasive conditions. For example, contact by vehicles driving over the temporary markers may potentially damage the temporary marker during use.

The temporary markers may be used for a variety of applications. Examples of suitable applications include temporary pavement markers, such a temporary boundary lines used during road construction to reroute traffic. When applied to a pavement surface, the temporary marker exhibits a first color, which is different from the color of the pavement surface (e.g., black of gray). Examples of suitable first colors of the temporary marker include white, blue and yellow. Such colors generally provide visible contrast to the black or gray colors of the pavement surface. The first color is maintained during the road construction work, thereby providing temporary boundary lines for traffic lanes.

When the road construction is completed, the temporary marker is heated to the specific temperature, or above, to irreversibly change the temporary marker from the first color to a second color that is preferably substantially the same color as the pavement surface. When the temporary marker is irreversibly changed to the second color, it is difficult to visually distinguish the temporary marker from the surrounding pavement surface. As such, the temporary markers effectively become and remain invisible to observers.

In addition to temporary boundary lines for traffic lanes, the temporary marker may constitute indicia, such as characters or symbols, applied to the pavement surface. For example, the temporary marker may provide guiding information visible to drivers and passengers during road construction, such as "Detour" and "Caution" warnings. When the road construction is completed, the indicia is irreversibly changed to substantially the same color as the pavement surface, as described above.

The temporary markers of the present invention do not require conventional removal or repainting to be rendered effectively invisible to observers. The temporary markers only require heating to the specific temperature, or above. This may be accomplish by a variety of means, such as with a burner. As such, the labor for such work is reduced, and the possibility of damaging the pavement surface (associated with shaving-off of conventional marking materials) may be eliminated.

### PROPERTY ANALYSIS AND CHARACTERIZATION PROCEDURES

Various analytical techniques are available for characterizing the marking materials and temporary markers of the present invention. The following analytical technique is employed herein.

### Visibility Test

Markers derived from marking materials were qualitatively measured for use as temporary markers on an asphalt pavement according to the following procedure. Each marking material was coated on asphalt pavement with a conventional paint roller to create a white line marker having a width of 20 centimeters and a length of 50 centimeters. The marker was then allowed to sit for two weeks after formation. After the two weeks, the marker was heated at temperatures from 200°C to 300°C for five minutes using a burner.

After heating, a qualitative determination was made whether or not the original white line was visible from a car located on the road where the marker was formed. The same qualitative determination was performed again one month after the formation of the marker.

### EXAMPLES

The present invention is more particularly described in the following examples that are intended as illustrations only, since numerous modifications and variations within the scope of the present invention will be apparent to those skilled in the art. Unless otherwise noted, all parts, percentages, and ratios reported in the following examples are on a weight basis, and all reagents used in the examples may be synthesized by conventional techniques.

### Example 1

Example 1 is a marking material of the present invention as a volatile solvent-based paint. Table 1 provides the component concentrations of the marking material of Example 1. The components were mixed to form a solution with the thermal-sensitive pigments and the silicone varnish being dispersed in the methyl ethyl ketone solvent. The thermal-sensitive pigment is derived from bismuth oxalate, which believed to have the chemical formula of Bi₂(C₂O₄)₃.

**TABLE 1**

| Components | Percent by Weight |
|---|---|
| Thermal-Sensitive Pigment | 25.0 |
| Silicone Varnish | 15.0 |
| Methyl Ethyl Ketone | 60.0 |

The marking material of Example 1 was heated and qualitatively measured pursuant to the "Visibility Test", described above. After being coated on the asphalt pavement, the marking material of Example 1 was then air-dried for five minutes to form the marker of Example 1. After being heated, the marker of Example 1 changed to a black color substantially the same color as the asphalt pavement, and the original white line was not visible from a car located on the road where the marker of Example 1 was formed. Pursuant to the Visibility Test, the original white line was also not visible after a one-month period. This illustrates capability of the marker of Example 1 to irreversibly change to a color that is substantially similar to the color of a surface structure, and to remain that color over time.

### Comparative Example 1

Comparative Example 1 concerns a thermoplastic-type pavement marking material, commercially available from Kictec Inc., Japan.

**TABLE 2**

| Components | Percent by Weight |
|---|---|
| Titanium Oxide | 6.5 |
| Calcium Carbonate | 61.0 |
| Hydrocarbon Resin | 15.0 |
| Plasticizer | 1.5 |
| Glass Beads | 16.0 |

The marking material of Comparative Example 1 was also heated and qualitatively measured pursuant to the "Visibility Test", described above. Prior to being coated on the asphalt pavement, the marking material of Comparative Example 1 was melted at 200°C. After coating, the marking material of Comparative Example 1 was then cooled and solidified to form the white marker of Comparative Example 1.

After being heated, the resin layer at the top surface of the marker of Comparative Example 1 was changed to black due to carbonization. As such, the original white line was not visible from a car located on the road where the marker of Comparative Example 1 was formed. However, the portion of the marker of Comparative Example 1 located under the carbonized resin layer remained white.

After one month, the carbonized resin layer of the marker of Comparative Example 1 was removed, and the original white line was readily visible from a car located on the road where the marker of Comparative Example 1 was formed. As such, the color of the marker of Comparative Example 1 was not irreversibly changed. In contrast, the marker of Example 1 was effectively rendered invisible to observers, and effectively remained invisible to observers over time.

Although the present invention has been described with reference to preferred embodiments, workers skilled in the art will recognize that changes may be made in form and detail without departing from the scope of the invention.

## Claims

1. A pavement marker for use an a pavement surface having a pavement color selected from a group consisting of gray and black, the pavement marker comprising: a mixture comprising a binder material and a thermal-sensitive pigment; wherein the pavement marker exhibits a first color different from the pavement color, and wherein upon being heated to a temperature of at least 70°C, the pavement marker irreversibly changes color from the first color to a second color, the second color being approximately the same as the pavement color.

2. The pavement marker of claim 1, wherein the thermal-sensitive pigment comprises an irreversible thermal-sensitive pigment.

3. The pavement marker of claim 2, wherein the thermal-sensitive pigment comprises a hydrated crystal-type thermal-sensitive pigment

4. The pavement marker of claim 3, wherein the thermal-sensitive pigment comprises bismuth oxalate.

5. The pavement marker of claim 1, wherein the binder material is selected from a group consisting of epoxy resins, acrylic resins, urethane resins, silicone varnish, polyamine resins, polyisocyanate resins, and combinations thereof.

6. The pavement marker of claim 1, wherein the temperature that the marker material irreversibly changes color is at least 100°C and less than or equal to 400°C.

7. The pavement marker of claim 1, wherein the first color is selected from a group consisting of white, blue, and yellow.

8. The pavement marker of claim 1, wherein the binder material constitutes 16% to 91% by weight of the mixture, and the thermal-sensitive pigment constitutes 9% to 83% by weight of the mixture.

9. The pavement marker of claim 8, wherein the binder material constitutes 25% to 67% by weight of the mixture, and the thermal-sensitive pigment constitutes 33% to 75% by weight of the mixture.

10. The pavement marker of claim 1 wherein the second color is substantially the same as the pavement color.

## Patentansprüche

1. Fahrbahnmarkierung zur Verwendung auf einer Fahrbahnoberfläche mit einer Fahrbahnfarbe, ausgewählt aus einer Gruppe bestehend aus grau und schwarz, wobei die Fahrbahnmarkierung umfasst: ein Gemisch umfassend ein Bindemittelmaterial und ein wärmeempfindliches Pigment, wobei die Fahrbahnmarkierung eine erste Farbe aufweist, die sich von der Fahrbahnfarbe unterscheidet, und wobei die Fahrbahnmarkierung nach Erwärmen auf eine Temperatur von mindestens 70 °C irreversibel die Farbe von der ersten Farbe zu einer zweiten Farbe ändert, wobei die zweite Farbe in etwa dieselbe wie die Fahrbahnfarbe ist.

2. Fahrbahnmarkierung nach Anspruch 1, wobei das wärmeempfindliche Pigment ein irreversibel wärmeempfindliches Pigment umfasst.

3. Fahrbahnmarkierung nach Anspruch 2, wobei das wärmeempfindliche Pigment ein hydratisiertes kristallartiges wärmeempfindliches Pigment umfasst.

4. Fahrbahnmarkierung nach Anspruch 3, wobei das wärmeempfindliche Pigment Bismutoxalat umfasst.

5. Fahrbahnmarkierung nach Anspruch 1, wobei das Bindemittelmaterial ausgewählt ist aus einer Gruppe bestehend aus Epoxyharzen, Acrylharzen, Urethanharzen, Siliconlack, Polyaminharzen, Polyisocyanatharzen und Kombinationen davon.

6. Fahrbahnmarkierung nach Anspruch 1, wobei die Temperatur, bei welcher das Markierungsmaterial irreversibel die Farbe ändert, mindestens 100 °C und weniger als oder gleich 400 °C beträgt.

7. Fahrbahnmarkierung nach Anspruch 1, wobei die erste Farbe ausgewählt ist aus einer Gruppe bestehend aus weiß, blau und gelb.

8. Fahrbahnmarkierung nach Anspruch 1, wobei das Bindemittelmaterial 16 bis 91 Gew.-% des Gemischs bildet und das wärmeempfindliche Pigment 9 bis 83 Gew.-% des Gemischs bildet.

9. Fahrbahnmarkierung nach Anspruch 8, wobei das Bindemittelmaterial 25 bis 67 Gew.-% des Gemischs bildet und das wärmeempfindliche Pigment 33 bis 75 Gew.-% des Gemischs bildet.

10. Fahrbahnmarkierung nach Anspruch 1, wobei die zweite Farbe im Wesentlichen dieselbe wie die Fahrbahnfarbe ist.

## Revendications

1. Marqueur de chaussée à utiliser sur la surface d'une chaussée ayant une couleur de chaussée choisie dans un groupe constitué du gris et du noir, le marqueur de chaussée comprenant un mélange comprenant un matériau liant et un pigment sensible à la chaleur, dans lequel le marqueur de chaussée présente une première couleur différente de la couleur de la chaussée, et dans lequel, lorsqu'on le chauffe à une température d'au moins 70°C, le marqueur de chaussée change de couleur de façon irréversible passant de la première couleur à une deuxième couleur, la deuxième couleur étant pratiquement la même que la couleur de la chaussée.

2. Marqueur de chaussée selon la revendication 1, dans lequel le pigment sensible à la chaleur comprend un pigment irréversiblement sensible à la chaleur.

3. Marqueur de chaussée selon la revendication 2, dans lequel le pigment sensible à la chaleur comprend un pigment sensible à la chaleur de type cristal hydraté.

4. Marqueur de chaussée selon la revendication 3, dans lequel le pigment sensible à la chaleur comprend de l'oxalate de bismuth.

5. Marqueur de chaussée selon la revendication 1, dans lequel le matériau liant est choisi dans un groupe constitué des résines époxy, des résines acryliques, des résines uréthane, d'un vernis silicone, des résines polyamine, des résines polyisocyanate, et de leurs combinaisons.

6. Marqueur de chaussée selon la revendication 1, dans lequel la température à laquelle le matériau marqueur change de couleur de façon irréversible est d'au moins 100°C et inférieure ou égale à 400°C.

7. Marqueur de chaussée selon la revendication 1, dans lequel la première couleur est choisie dans un groupe constitué du blanc, du bleu et du jaune.

8. Marqueur de chaussée selon la revendication 1, dans lequel le matériau liant constitue 16% à 91% en poids du mélange, et le pigment sensible à la chaleur constitue 9% à 83% en poids du mélange.

9. Marqueur de chaussée selon la revendication 8, dans lequel le matériau liant constitue 25% à 67% en poids du mélange, et le pigment sensible à la chaleur constitue 33% à 75% en poids du mélange.

10. Marqueur de chaussée selon la revendication 1, dans lequel la deuxième couleur est pratiquement la même que la couleur de la chaussée.
